# FASCICULE DE BREVET EUROPEEN

(11) **EP 0 556 079 B1**
(45) Date de publication et mention de la délivrance du brevet: **20.03.1996**
(21) Numéro de dépôt: 93400192.6
(22) Date de dépôt: 27.01.1993
(51) Int. Cl.: B65D 5/74

(54) **Emballage biodégradable avec bec verseur**
Biologisch abbaubare Verpackung mit Ausguss
Biodegradable package with pouring spout

(30) Priorité: 29.01.1992 FR 9200930
(43) Date de publication de la demande: 18.08.1993
(73) Titulaire: SAINT GERMAIN - CARTONNAGE, F-02200 Soisson (FR)
(72) Inventeur: Besson, Jean-Paul, F-02200 Mercin et Vaux (FR)
(74) Mandataire: Laget, Jean-Loup

(56) Documents cités:
- US-A- 3 568 910

## Description

L'invention concerne un emballage en matière pliable biodégradable, notamment en carton, muni d'un bec verseur.

Les emballages utilisés notamment pour le conditionnement de produits de consommation granuleux ou pulvérulents tels que par exemple : farine, sucre, riz, doivent être à la fois faciles d'emploi, peu coûteux et hermétiques.

Il existe des emballages comportant dans la région centrale d'une paroi un bec verseur escamotable sensiblement rectangulaire, en métal ou en un matériau rigide distinct du matériau de l'emballage. Ces emballages donnent satisfaction mais présentent les inconvénients suivants : d'une part, lors du recyclage de vieux emballages, les becs verseurs en matériau rigide ne peuvent être recyclés en même temps que les emballages en matière pliable ; d'autre part, lorsqu'on ne recycle pas des emballages constitués en matériau biodégradable, les becs verseurs non-biodégradables constituent une source de pollution pour l'environnement.

Mais, lorsque l'on fabrique les becs verseurs rectangulaires en carton, on constate que la résistance à l'écrasement de l'emballage diminue notablement du fait que le bec verseur n'est plus en matériau rigide et ne contribue plus à la solidité de l'emballage.

Les documents DE 38 32 544 C1 et DE-GM 74 12129 tentent de pallier la chute de la résistance à l'écrasement en reliant le bec verseur rectangulaire aux angles de l'emballage. Ces solutions conduisent toutefois à imposer l'emplacement du bec verseur ou ses dimensions et ne permettent pas d'obtenir la résistance à l'écrasement pour l'empilage et le gerbage d'emballages sur des grandes hauteurs à l'aide d'une conception simple et d'une fabrication économique.

Le document FR 2.106.720 décrit une boîte d'emballage en carton comportant une ouverture de prélèvement qui peut être obturée par un volet ou rabat de fermeture pivotant formant en position ouverte un bec verseur. Le volet comporte une partie de fermeture et deux pattes pivotant autour de lignes d'articulation correspondantes.

Le document US 4.953.781 décrit une boîte d'emballage comportant un bec verseur en carton repliable muni d'une languette de préhension : l'élasticité des plis de ce bec verseur entraîne une fermeture imparfaite du bec verseur et un défaut d'herméticité.

Enfin, le document US 3.568.910 décrit un emballage selon le préambule de la revendication 1, comportant un bec verseur escamotable en carton prélevé sur une paroi de la boîte. Ce bec verseur présente en position d'ouverture une forme de petit canal frottant sur les bords de l'ouverture correspondante ; ce bec verseur n'est pas adapté au versement de poudres ou de farine susceptible de couler au-dessus des bords dudit canal.

L'invention a pour but de remédier aux inconvénients précités en créant un emballage de conception simple, robuste et empilable sur des grandes hauteurs, muni d'un bec verseur escamotable sans frottement latéral et assurant un conditionnement hermétique des produits contenus.

Ce but est atteint par un emballage selon la revendication 1.

Selon d'autres caractéristiques de l'invention :
- la partie centrale rétrécie est en forme de trapèze inscrit dans et inversé par rapport à ladite ouverture trapézoïdale ;
- la forme trapézoïdale extérieure constitue la patte de préhension du bec verseur ;
- les ailes latérales forment entre elles un angle diminuant progressivement hors de l'ouverture du bec verseur ;
- deux fentes délimitent dans la paroi, au-dessus de la patte de préhension, un espace de largeur correspondant à l'insertion d'un doigt et de largeur inférieure à la grande base de la patte de préhension ;
- les ailes latérales comportent des ergots de retenue.

Selon une première variante préférée de l'invention, l'ensemble avec deux ailes latérales est prélevé par découpage d'une paroi intérieure rendue solidaire par collage ou analogue de la paroi extérieure dans laquelle est découpée et articulée la patte de préhension ; au-dessus de l'ensemble, une zone flexible est déterminée dans la paroi intérieure par deux fentes d'écartement compris entre l'écartement des fentes au-dessus de la patte de préhension et la longueur de la grande base de la patte de préhension.

Les bords de la zone flexible sont, avantageusement, disposés en chicane par rapport aux bords de l'espace au-dessus de la patte de préhension pour empêcher toute fuite directe du produit emballé.

Selon une deuxième variante de l'invention, l'ensemble avec deux ailes latérales est une pièce rapportée.

L'invention sera mieux comprise grâce à la description qui va suivre donnée à titre d'exemple non limitatif au regard des dessins annexés dans lesquels :

La figure 1 représente une vue schématique en perspective d'un emballage de type connu.

La figure 2 représente une vue en plan d'un emballage selon l'invention, à plat.

La figure 3 représente une vue partielle en plan de la face extérieure d'un emballage selon l'invention après assemblage.

La figure 4 représente une vue de face extérieure d'un emballage selon l'invention avec bec verseur ouvert.

La figure 5 représente une vue en coupe partielle selon la ligne V-V de la figure 4 d'un emballage selon l'invention avec un bec verseur ouvert.

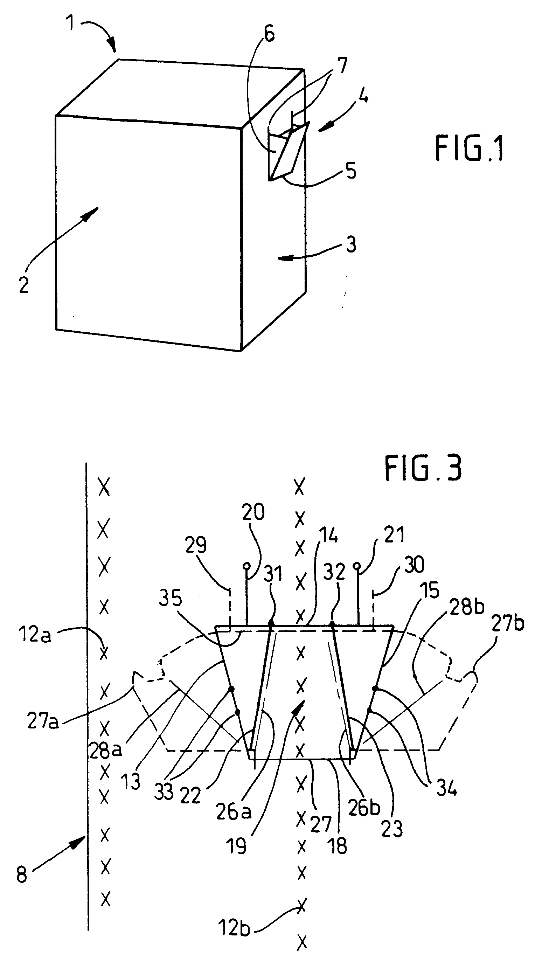

En référence à la figure 1, un emballage 1 de type connu se présente sous la forme d'une boîte 2 sensiblement parallélépipédique en un matériau biodégradable ou recyclable, tel que du carton.

Dans le haut d'une région centrale d'une face verticale 3, on a inséré un bec verseur sensiblement rectangulaire en matériau non-biodégradable, tel que de l'aluminium ou une matière plastique rigide.

Le bec verseur 4 pivote autour de sa base 5 dans le sens de l'ouverture en dégageant deux secteurs circulaires 6 coulissant à frottement dans des fentes 7 de la face 3.

La hauteur du bec verseur 4 est telle qu'il recouvre le haut des fentes 7 en position fermée et que la fermeture hermétique de l'emballage 1 est ainsi assurée.

Le frottement des secteurs circulaires 6 dans les fentes 7 empêche l'ouverture accidentelle du bec verseur 4 de l'emballage 1 préjudiciable à la bonne conservation du contenu.

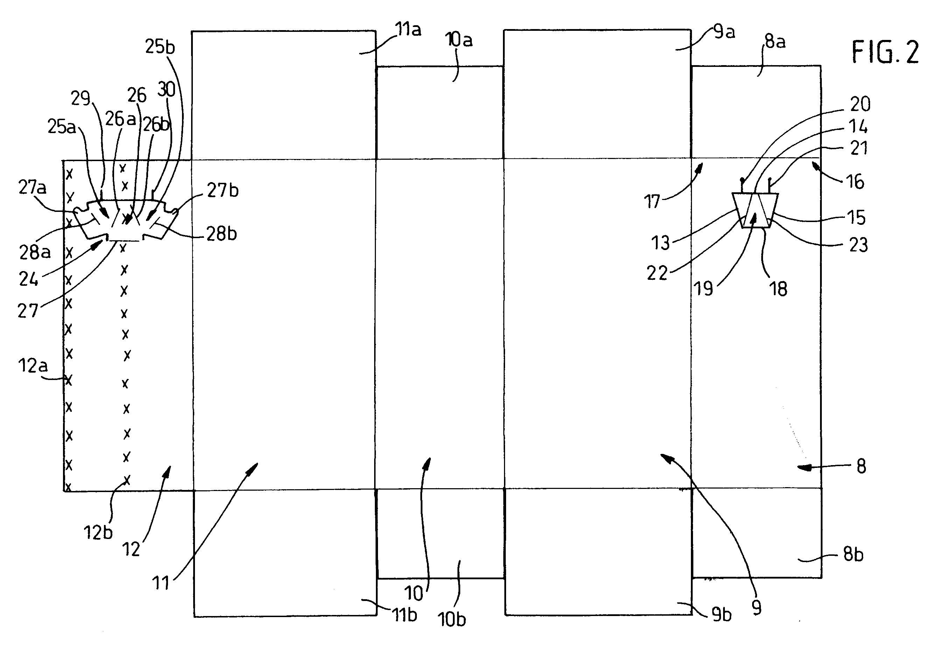

En référence à la figure 2, un emballage selon l'invention est entièrement constitué en matériau pliable recyclable ou biodégradable tel que du carton.

L'emballage selon l'invention représenté à plat comporte quatre faces latérales 8, 9, 10, 11 visibles après assemblage, et une cinquième face latérale 12 destinée à être collée le long de deux lignes de collage 12a, 12b au dos de la face latérale 8.

L'emballage comporte également des rabats 8a - 11a, 8b - 11b, destinés à être collés entre eux pour constituer, de manière connue en soi, les faces supérieure et inférieure de l'emballage selon l'invention.

Dans la région centrale d'une face 8 correspondant à la paroi portant le bec verseur, on pratique, à distance des lignes de rainage correspondant aux angles de l'emballage, des lignes d'affaiblissement 13, 14, 15 délimitant une ouverture sensiblement trapézoïdale.

La grande base 14 de l'ouverture trapézoïdale correspondant au bec verseur de l'emballage selon l'invention est située du côté des angles supérieurs 16, 17 de l'emballage en position sensiblement symétrique.

La petite base 18 de l'ouverture trapézoïdale est une ligne de rainage destinée à constituer une charnière pour une patte de préhension 19 du bec verseur selon l'invention.

La patte de préhension 19 est surmontée de deux fentes 20, 21 délimitant avec la ligne d'affaiblissement 14 correspondant à la grande base un espace de largeur correspondant à l'insertion d'un doigt et inférieure à la longueur de la ligne d'affaiblissement 14 correspondant à la grande base de l'ouverture trapézoïdale.

La patte de préhension 19 comporte éventuellement deux traits 22, 23 d'incision à mi-chair visualisant le sens d'ouverture et de versage du bec verseur.

Sur la cinquième face 12 destinée à être assemblée par exemple par collage le long de deux lignes 12a, 12b au dos de la face 8 et à l'intérieur de l'emballage selon l'invention, on a découpé un ensemble 24 comportant deux ailes latérales 25a, 25b et une partie centrale 26 comprise entre deux traits d'incision à mi-chair 26a, 26b et pouvant s'articuler par une charnière constituée par une ligne de rainage 27.

La partie centrale 26 se rétrécit vers le côté supérieur de l'emballage et est limitée par les lignes d'articulation 26a, 26b des ailes latérales 25a, 25b, orientées de manière à converger vers le côté supérieur de l'emballage.

La partie centrale 26 de l'ensemble 24 est assemblée à la patte de préhension 19 de préférence par collage de manière à ce que les ailes 25a, 25b pivotent autour de la partie centrale 26 le long des traits 26a, 26b, lors d'ouvertures et de fermetures successives du bec verseur.

Les ailes latérales rabattables 25a, 25b comportent de préférence des ergots de retenue 27a, 27b et éventuellement des traits d'incision à mi-chair 28a, 28b d'assouplissement.

Deux segments 29, 30 constituent des fentes traversantes délimitant une zone flexible au-dessus de la partie centrale 26.

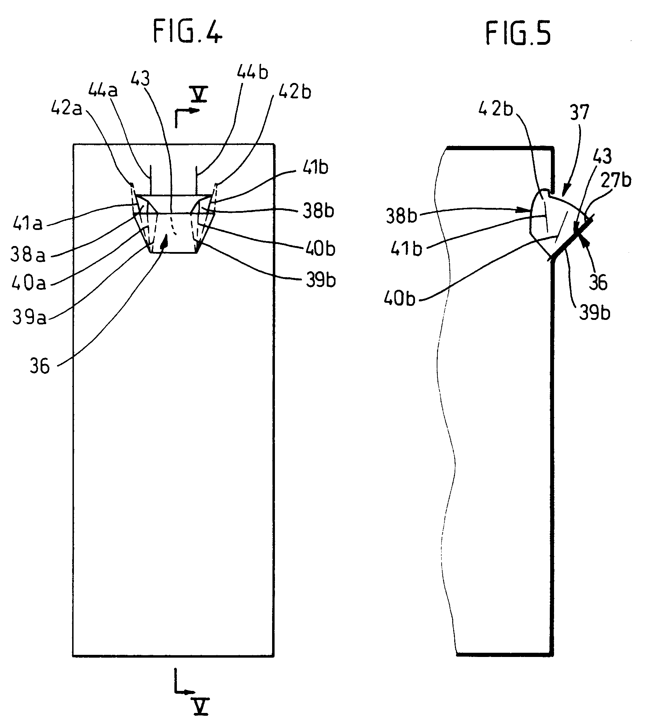

En référence à la figure 3, après assemblage le long de deux lignes de collage 12a, 12b, la partie centrale 26 de l'ensemble 24 est collée à la patte de préhension 19 à l'intérieur des lignes 22, 23.

Selon l'invention, les lignes d'articulation 26a, 26b limitant la partie centrale rétrécie 26 sont orientées en sens inverse des côtés 13, 15 de l'ouverture trapézoïdale extérieure, de manière que les ailes 25a, 25b présentent un jeu important dans leur mouvement d'articulation à l'intérieur des côtés 13, 15 de l'ouverture trapézoïdale. Dans l'exemple représenté, la partie centrale rétrécie 26 est en forme de trapèze inscrit dans, et inversé par rapport à l'ouverture trapézoïdale : la grande base de la partie centrale 26 correspond à la petite base 18 de l'ouverture trapézoïdale.

La patte de préhension 19 est solidaire de la face 8 par les points d'attache 31, 32, 33, 34 situés sur les lignes 14, 13, 15, respectivement.

Par simple pression du doigt entre les fentes 20 et 21, on provoque la rupture des points d'attache 31 et 32.

Puis en insérant le doigt dans l'espace compris entre les fentes 20 et 21 et à l'intérieur de la zone flexible délimitée par les segments 29 et 30, on tire de l'intérieur sur la patte de préhension 19 et on provoque la rupture progressive des points d'attache 33 et 34 et la libération de la patte de préhension 19.

Du fait de l'inclinaison des côtés 13 et 15 de l'ouverture trapézoïdale par rapport à la direction de traction, l'ouverture par rupture successive de points d'attache tels que 33 et 34 est progressive et nécessite beaucoup moins d'effort que dans le cas d'une ouverture rectangulaire, où tous les points d'attache sont alignés avec la direction de traction.

Selon l'invention, on voit que la longueur de la grande base 14 est supérieure à la largeur de la zone flexible délimitée par les fentes 29 et 30, laquelle est supérieure ou égale à la largeur de l'espace correspondant à l'insertion d'un doigt entre les fentes 20 et 21 : de cette manière, on peut faire jouer la zone flexible en insérant le doigt entre les fentes 20 et 21 sans provoquer d'amorce de déchirure dans l'emballage selon l'invention.

En prélevant ainsi la patte de préhension 19 dans la face latérale 8, la patte 19 correspond exactement au contour de l'ouverture trapézoïdale produite dans l'emballage selon l'invention et en assure la fermeture étanche.

Les bords de l'ensemble 24 et les fentes 29 et 30 sont avantageusement disposés en chicane par rapport aux fentes 20 et 21 et au contour de la patte de préhension 19, en particulier le long de la grande base 14.

Cette disposition en chicane s'obtient de manière connue par un choix des dimensions et des emplacements des différentes lignes d'incision traversantes correspondantes: cette disposition en chicane assure la bonne étanchéité de l'emballage selon l'invention.

En outre, lorsque le bec verseur est fermé, la patte de préhension 19 se confond avec la paroi de l'emballage sans dépasser de la face latérale 8 dans laquelle elle est prélevée et ne peut être enfoncée à l'intérieur de l'emballage du fait que la patte 19 vient en appui par sa grande base 14 sur une butée constituée par un bord 35 de la cinquième face 12.

Le mode de réalisation décrit en référence aux figures 2 et 3 constitue une première variante préférée de l'invention, dans laquelle l'ensemble avec deux ailes latérales est prélevé par découpage d'une paroi intérieure rendue solidaire par collage ou analogue de la paroi extérieure dans laquelle est découpée et articulée la patte de préhension.

On va maintenant décrire un emballage selon l'invention dont le mode de fonctionnement correspond aussi bien à la première variante préférée qu'à une deuxième variante dans laquelle l'ensemble avec les deux ailes latérales est une pièce rapportée rendue solidaire par collage de la patte de préhension.

Dans cette deuxième variante de réalisation de l'invention, le bec verseur correspondant présente en partie centrale une épaisseur supérieure à celle de la paroi dans laquelle il s'articule par la petite base d'une ouverture sensiblement trapézoïdale.

Les fentes correspondant aux fentes 20 et 21 de la figure 3 subsistent dans cette variante de réalisation, tandis que les fentes 29 et 30 ne peuvent être réalisées en l'absence de paroi intérieure.

Lorsque l'on tire sur la languette de préhension 19, l'inclinaison de côtés latéraux tels que 13 et 15 permet une ouverture progressive et facile du fait qu'après l'ouverture, les ailes latérales telles que 25a, 25b pivotent en glissant librement autour des côtés latéraux 13 et 15 et provoquent le relèvement des ergots 27a, 27b vers l'intérieur de l'emballage selon l'invention.

Selon l'invention, le coulissement à frottement des becs verseurs sensiblement rectangulaires de type connu est ainsi totalement supprimé, pour faire place à une ouverture progressive et facile par pivotement et glissement des ailes latérales formant entre elles un angle dièdre diminuant progressivement lors de l'ouverture du bec verseur selon l'invention : cet angle diminue à partir de 180° jusqu'à environ 60°.

En référence aux figures 4 et 5, un emballage selon l'invention comporte un bec verseur en position ouverte.

Le bec verseur comporte une patte de préhension 36 sensiblement trapézoïdale s'articulant sur une paroi extérieure par exemple par sa petite base.

Un ensemble 37 comporte deux ailes latérales 38a, 38b avec des lignes de rainage 39a, 39b ; 40a, 40b ; 41a, 41b ; deux ergots de retenue 42a, 42b ; et une partie centrale 43 solidaire de la patte sensiblement trapézoïdale 36. Les lignes de rainage 39a à 41b sont prévues pour faciliter le relèvement des ailes 38a, 38b lors de leur pivotement autour des bords de l'ouverture trapézoïdale.

L'ouverture du bec verseur s'obtient par insertion d'un doigt entre les fentes 44a et 44b, et par traction sur la patte de préhension 36.

La traction sur la patte 36 provoque l'ouverture du bec verseur et entraîne la formation de plis correspondant aux lignes de rainage 39a à 41b, jusqu'à ce que les ergots de retenue 42a et 42b viennent en butée aux angles supérieurs de l'ouverture de contour correspondant à celui de la patte trapézoïdale 36.

L'emballage selon l'invention est de conception simple et peut être fabriqué de manière économique sur les machines de fabrication existantes.

Les emballages à bec verseur selon l'invention présentent une résistance à l'écrasement analogue à celle des emballages correspondants sans bec verseur, alors que la présence d'un bec verseur diminue en général les qualités de résistance d'un emballage.

Bien que l'invention soit décrite en référence à un mode de réalisation particulier, elle n'y est nullement limitée et englobe au contraire toutes les variantes de forme et d'exécution dans le cadre de l'invention tel que défini par les revendications : en particulier, l'invention s'applique à des emballages avec des ailes latérales de forme quelconque comportant ou non des traits d'incision à mi-chair ou des lignes de rainage.

## Revendications

1. Emballage en matériau biodégradable tel que du carton, comportant une ouverture trapézoïdale dans la région centrale d'une paroi et un bec verseur escamotable ; la grande base de l'ouverture étant située du côté des angles supérieurs de l'emballage ; le bec verseur escamotable étant assemblé à partir d'une forme trapézoïdale extérieure (19) correspondant à ladite ouverture trapézoïdale et d'un ensemble intérieur (24, 37) présentant une partie centrale (26) autour de laquelle deux ailes latérales (25a, 25b) sont articulées au moyen de lignes (26a, 26b), caractérisé en ce que la partie centrale (26) est rétrécie vers le côté supérieur de l'emballage et est limitée par les lignes d'articulation (26a, 26b) des ailes latérales (25a, 25b) orientées de manière à converger vers le côté supérieur de l'emballage, de manière que les ailes (25a, 25b) présentent un jeu avec les côtés (13, 15) de l'ouverture trapézoïdale (19), et que l'ouverture du bec verseur s'effectue sans frottement des ailes latérales sur les côtés de l'ouverture trapézoïdale.

2. Emballage selon la revendication 1, caractérisé en ce que la partie centrale (26) rétrécie est en forme de trapèze inscrit dans et inversé par rapport à ladite ouverture trapézoïdale.

3. Emballage selon l'une des revendications 1 ou 2, caractérisé en ce que la forme trapézoïdale extérieure (19) constitue la patte de préhension du bec verseur.

4. Emballage selon l'une des revendications précédentes, caractérisé en ce que les ailes latérales (25a, 25b) forment entre elles un angle diminuant progressivement hors de l'ouverture du bec verseur.

5. Emballage selon la revendication 3, caractérisé en ce que deux fentes (20, 21 ; 44a, 44b) délimitent dans la paroi, au-dessus de la patte de préhension (19, 36), un espace de largeur correspondant à l'insertion d'un doigt et de largeur inférieure à la grande base (14) de la patte de préhension (19).

6. Emballage selon l'une des revendications 2 à 5, caractérisé en ce que les ailes latérales (25a, 25b ; 38a, 38b) comportent des ergots de retenue (27a, 7b, 42a, 42b).

7. Emballage selon l'une des revendications 2 à 6, caractérisé en ce que l'ensemble (24, 37) avec deux ailes latérales est prélevé par découpage d'une paroi intérieure rendue solidaire par collage ou analogue de la paroi extérieure dans laquelle est découpée et articulée la patte de préhension (19, 36).

8. Emballage selon la revendication 5 et la revendication 7, caractérisé en ce que, au-dessus de l'ensemble (24, 37), une zone flexible est déterminée dans la paroi intérieure par deux fentes (29a, 30b) d'écartement compris entre l'écartement des fentes (20, 21) au-dessus de la patte de préhension (19) et la longueur de la grande base (14) de la patte de préhension (19).

9. Emballage selon la revendication 8, caractérisé en ce que les bords de la zone flexible sont disposés en chicane par rapport aux bords de l'espace au-dessus de la patte de préhension (19).

10. Emballage selon l'une des revendications 2 à 6, caractérisé en ce que l'ensemble (24, 37) avec deux ailes latérales est une pièce rapportée.

## Claims

1. A packaging made of biodegradable material such as cardboard, comprising a trapezoidal opening in the central region of one wall, and an extendable pouring spout, the large base of the opening being located on the side of the upper corners of the packaging, the extendable pouring spout being assembled from an outer trapezoidal shape (19) corresponding to the said opening and an inner assembly (24, 37) having a central part (26), around which two lateral wings (25a, 25b) are articulated by means of lines (26a, 26b), characterized in that the central part (26) is constricted towards the upper side of the packaging and is limited by said articulation lines (26a, 26b), which are oriented in order to converge towards the upper side of the packaging, such that the wings (25a, 25b) have a play with the sides (13, 15) of the trapezoidal opening (19), and that the pouring spout is opened without the lateral wings rubbing on the sides of the trapezoidal opening.

2. A packaging according to Claim 1, characterised in that the constricted central part (26) is in the form of a trapezium marked in and inverted with respect to said trapezoidal opening.

3. A packaging according to one of Claims 1 or 2, characterised in that the outer trapezoidal shape (19) forms the grasping tab of the pouring spout.

4. A packaging according to one of the preceding Claims, characterised in that the lateral wings (25a, 25b) form between them an angle which diminishes progressively outside the opening of the pouring spout.

5. A packaging according to Claim 3, characterised in that two slits (20, 21; 44a, 44b) define, within the wall, above the grasping tab (19, 36), a space of a width corresponding to the insertion of a finger and of a width less than the large base (14) of the grasping tab (19).

6. A packaging according to one of Claims 2 to 5, characterised in that the lateral wings (25a, 25b; 38a, 38b) comprise retaining lugs (27a, 7b, 42a, 42b).

7. A packaging according to one of Claims 2 to 6, characterised in that the assembly (24, 37) with two lateral wings is made by cutting out from an inner wall rendered integral by gluing or similar means with the outer wall in which the grasping tab (19, 36) is cut out and articulated.

8. A packaging according to Claim 5 and Claim 7, characterised in that, above the assembly (24, 37), a flexible zone is established in the inner wall by two separating slits (29a, 30b) comprised between the distance between the slits (20, 21) above the grasping tab (19) and the length of the large base (14) of the grasping tab (19).

9. A packaging according to Claim 8, characterised in that the edges of the flexible zone are arranged in a chicane with respect to the edges of the space above the grasping tab (19).

10. A packaging according to one of Claims 2 to 6, characterised in that the assembly (24, 37) with two lateral wings is an attached piece.

## Patentansprüche

1. Verpackung aus biologisch abbaubarem Material wie beispielsweise Karton, mit einer trapezförmigen Öffnung in dem mittleren Bereich einer Wand und einem ausziehbaren Ausgießer, wobei die lange Grundlinie der Öffnung an der Seite der oberen Ecken der Verpackung angeordnet ist, wobei der ausziehbare Ausgießer ausgehend von dieser trapezförmigen äußeren Form (19), die mit der genannten Öffnung übereinstimmt, und einer inneren Anordnung (24, 37) aufgebaut ist, die einen mittleren Abschnitt (26) aufweist, und um den herum zwei Seitenflügel (25a, 25b) mittels Linien (26a, 26b) gegliedert sind, dadurch gekennzeichnet daß der mittlere Abschnitt (26) in Richtung der oberen Seite der Verpackung verengt ist und durch diesen in Richtung der oberen Seite der Verpackung konvergierenden und orientierten Linien (26a, 26b) begrenzt ist, so daß die Flügel (25a, 25b) mit den Seiten (13, 15) der trapezförmigen Öffnung (19) zusammenwirken, und daß die Öffnung des Ausgießers ohne Reibung der Seitenflügel an den Seiten der trapezförmigen Öffnung erfolgt.

2. Verpackung nach Anspruch 1, **dadurch gekennzeichnet,** daß der mittlere, verengte Abschnitt (26) die Form eines Trapezes aufweist, welches einbeschrieben in und umgekehrt im Verhältnis zu der genannten trapezförmigen Öffnung ist.

3. Verpackung nach einem der Ansprüche 1 und 2, **dadurch gekennzeichnet**, daß die äußere Trapezform (19) gleichzeitig die Griffleiste des Ausgießers bildet.

4. Verpackung nach einem der vorstehenden Ansprüche, **daduch** **gekennzeichnet**, daß die Seitenflügel (25a, 25b) untereinander einen Winkel bilden, der fortschreitend abnimmt nach der Öffnung des Ausgießers.

5. Verpackung nach Anspruch 3, **dadurch gekennzeichnet**, daß zwei Schlitze (20,21; 44a,44b) in der Wand unterhalb der Griffleiste (19,36) einen Raum begrenzen, dessen Größe für das Einschiehen eines Fingers geeignet ist, und dessen Größe geringer ist als diejenige der langen Grundlinie (14) der Griffleiste (19).

6. Verpackung nach einem der Ansprüche 2 bis 5 **dadurch gekennzeichnet**, daß die Seitenflügel (25a,25b; 38a,38b) Zurückhaltevorsprünge (27a, 27b; 42a,42b) umfassen.

7. Verpackung nach einem der Ansprüche 2 bis 6, **dadurch gekennzeichnet**, daß die Anordnung (24,37) mit zwei Seitenflügeln durch Ausschneiden aus einer Innenwand hergestellt ist, die mittels Klebung oder ähnlichen Verfahren mit der Außenwand verbunden ist, in der die Griffleiste (19,36) ausgeschnitten und ausgebildet ist.

8. Verpackung nach Ansprüche 5 und 7, **dadurch gekennzeichnet**, daß oberhalb der Anordnung (24, 37) eine flexible Zone in der Innenwand durch zwei Schlitze (29,30) mit einem Abstand, der zwischen dem Abstand der Schlitze (20,21) oberhalb der Griffleiste (19) und der Länge der langen Grundlinie (14) der Griffleiste (19) liegt, ausgebildet ist.

9. Verpackung nach Anspruch 8, **dadurch gekennzeichnet**, daß die Ränder der flexiblen Zone gegeneinander versetzt in Bezug auf die Ränder des Raums oberhalb der Griffleiste (19) angeordnet sind.

10. Verpackung nach einem der Ansprüche 2 bis 6, **dadurch gekennzeichnet,** daß die Anordnung (24,37) mit den zwei Seitenflügeln ein aufgesetztes Teil ist.
